# EUROPEAN PATENT SPECIFICATION

(11) **EP 2 444 311 B1**
(45) Date of publication and mention of the grant of the patent: **31.07.2013**
(21) Application number: 10789135.0
(22) Date of filing: 17.03.2010
(51) Int. Cl.: B62M 6/45, B60L 15/20

(54) **ELECTRIC ASSIST BICYCLE**
ELEKTRISCHES HILFSFAHRRAD
BICYCLETTE A ASSISTANCE ELECTRIQUE

(30) Priority: 19.06.2009 JP 2009145917
(43) Date of publication of application: 25.04.2012
(73) Proprietor: Panasonic Corporation, Kadoma-shi Osaka 571-8501 (JP)
(72) Inventor: YOSHIMURA, Masaya, Osaka-shi, Osaka 540-6207 (JP)
(74) Representative: Grünecker, Kinkeldey, Stockmair & Schwanhäusser
(86) International application number: PCT/JP2010/001890
(87) International publication number: WO 2010/146750

(56) References cited:
- EP-A1- 1 967 446
- JP-A- 8 239 081
- JP-A- 9 207 865
- JP-A- 11 278 361
- JP-A- 2000 072 080
- JP-A- 2000 344 175

## Description

### Technical Field

The present invention relates to an electric assist bicycle which travels while supplementing the pedal force of a rider with a rotation of an electric motor, in particular, to a method for controlling the electric motor.

### Background Art

An electric assist bicycle has been typically known in which the pedal force of a rider required during cycling is supplemented with a motor (electric motor) rotated by a power source (for example, a secondary battery) to reduce a load on the rider. Such an electric assist bicycle can reduce a load on the rider by driving the motor to add the rotary driving force of the motor to the pedal force, particularly when large pedal force (human driving force) is required on an uphill road or at the start of traveling.

In the electric assist bicycle, it is desirable that the driven motor is swiftly stopped such that the bicycle can travel as the rider intends when the rider stops pedaling, that is, when the rider wants free-wheeling or wants to stop traveling.

The document JP2000072080 represents the closest prior art and discloses an electric assist bicycle with the features of the preamble of claim 1.

Patent Literature 1 discloses a method for performing control to stop a driven motor by sensing that a rider stops pedaling. In the method, a pedal force detector (for example, a torque sensor) for detecting the pedal force of the rider applied on a pedal is provided on an electric assist bicycle, and the driven motor is stopped when the pedal force detected by the pedal force detector becomes not larger than a predetermined drive stop reference value.

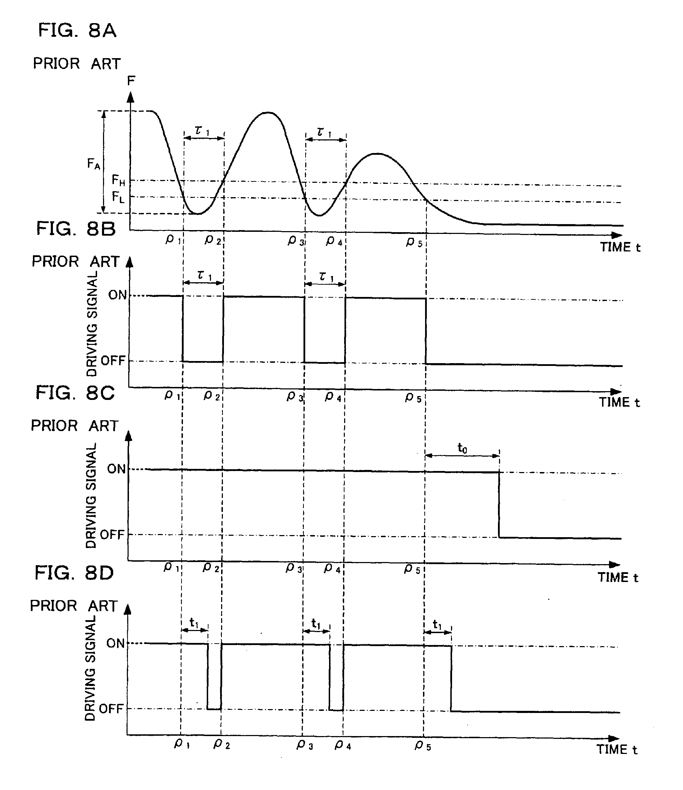

However, in effect, the pedal force applied to the pedal fluctuates even when the rider turns the pedal once. Thus, as shown in FIGS. 8(a) and 8(b), control is performed to immediately stop the driven motor at points ρ₁, ρ₃, and ρ₅, when detected pedal force F simply becomes not larger than drive stop reference value F_{L}, so that the driven motor is stopped (although pedaling is performed) at the points ρ₁ and ρ₃ when the pedal force decreases while the pedal turns once.

Further, in the case where the motor is set to start being driven at points ρ₂ and ρ₄ when the detected pedal force F exceeds a drive start reference value F_{H} which is slightly larger than the drive stop reference value F_{L}, the motor stops and starts while the pedal turns once when both the drive stop reference value F_{L} and the drive start reference value F_{H} fall within the range of amplitude F_{A} of the pedal force.

Thus, since the start and stop of driving the motor are repeated for each turn of the pedal, as shown in FIG. 8(b), the operation of the motor frequently switches, so that the pedal force may be supplemented or not be supplemented. Consequently, resistance experienced by the rider during pedaling frequently causes rapid change (so-called chattering), resulting in an extremely uncomfortable ride.

In order to avoid chattering, as shown in FIG. 8(c), there has been a method in which the motor is stopped when specified upper limit time to elapses in the state where the detected pedal force F is not larger than the drive stop reference value F_{L} (F ≤ F_{L}), instead of stopping the motor (turning a driving signal OFF) at the moments ρ₁, ρ₃, and ρ₅ when the detected pedal force F becomes not larger than the drive stop reference value F_{L}.

According to this method, as shown in the left area of FIG. 8(a), the motor is not stopped (the driving signal remains ON) due to a reduction in pedal force for a short period of time (between ρ₁ and ρ₂ and between ρ₃ and ρ₄) such as pedal force reducing period τ₁ during one turn of the pedal, so that chattering is prevented during pedaling.

Further, as shown in FIG. 8(d), when a period of time since the detected pedal force F becomes not larger than the drive stop reference value F_{L} until the motor is stopped is set to specified short time t₁ which is shorter than the pedal force reducing period τ₁ (t₁ <τ₁, for example, 0.3 seconds), chattering cannot be avoided. Thus, the specified upper limit time to has to be set longer than the pedal force reducing period τ₁ during one turn of the pedal (τ₁ < t₀, for example, 1 second).

### Citation List

### Patent Literatures

Patent Literature 1: Japanese Patent Application Laid-Open Publication No. 10-076987

### Summary of Invention

### Technical Problem

However, this method may cause a problem in which the motor is continuously driven although pedaling is stopped during traveling at high speed, so that the electric assist bicycle travels a long distance. The following will specifically describe the problem.

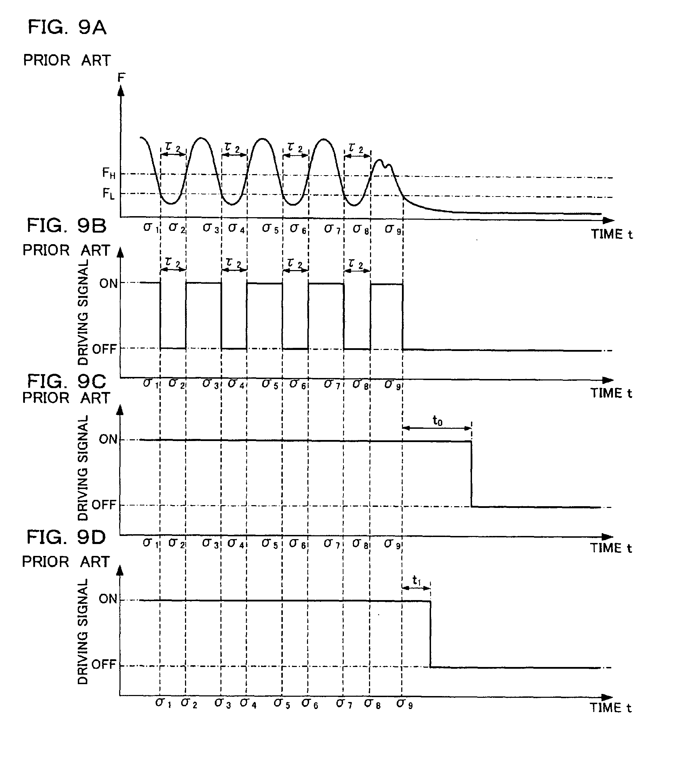

FIG. 8 shows change with time of the pedal force F and the motor driving signal during traveling at low speed. FIG. 9 shows change with time of the pedal force F and the motor driving signal during traveling at high speed. In the method of the related art, since the specified upper limit time t₀ is kept constant, as shown in FIGS. 8(c) and 9(c), the time since the pedal force F becomes not larger than the drive stop reference value F_{L} (F ≤ F_{L}) until the drive is stopped is the same during both traveling at low speed and traveling at high speed.

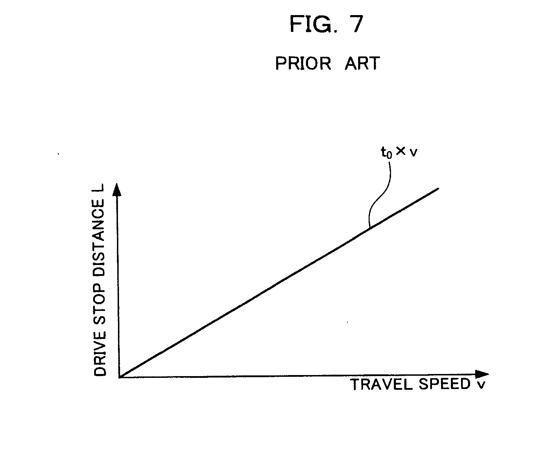

FIG. 7 shows the relationship between drive stop distance L and travel speed v of the electric assist bicycle, the drive stop distance L being a distance which the electric assist bicycle travels since the detected pedal force F becomes not larger than the drive stop reference value F_{L} until the driven motor is stopped.

The drive stop distance is represented by L = t₀ × v wherein the drive stop distance L increases with an increase in travel speed v, because time t is the same since the detected pedal force F becomes not larger than the drive stop reference value F_{L} until the driven motor is stopped during both traveling at low speed and traveling at high speed (t = t₀).

Consequently, during traveling at high speed, even when the rider stops pedaling, the electric assist bicycle travels the distance L = t₀ × v with the driven motor. Thus, the traveling cannot be stopped as the rider intends, thereby reducing the safety.

In order to stop traveling almost as the rider intends, as shown in FIGS. 9(a) and 9(d), there has been a method for shortening beforehand the time since the detected pedal force F becomes not larger than the drive stop reference value F_{L} (F ≤ F_{L}) until the driven motor is stopped. In other words, the driven motor is stopped when specified short time t₁ (< to) elapses after the detected pedal force F becomes not larger than the drive stop reference value F_{L}.

According to this method, as shown in FIGS. 9(a) and 9(d), the driven motor is stopped (the driving signal is turned OFF) in the specified short time t₁ which is shorter than to (t₁ < t₀, for example, 0.3 seconds) after the detected pedal force F becomes not larger than the drive stop reference value F_{L}. Thus, the drive stop distance is short even during traveling at high speed (t₁ × v < t₀ × v), so that traveling can be stopped almost as the rider intends. Further, according to this method, the driven motor is not stopped at the moment when the detected pedal force F becomes not larger than the drive stop reference value F_{L}. Thus, chattering does not occur during traveling at high speed, unlike in the case where control is performed as shown in FIG. 9(b) such that the driven motor is stopped at points σ₁, σ₃, σ₅, σ₇, and σ₉ when the detected pedal force F becomes not larger than the drive stop reference value F_{L}, and the motor starts being driven at points σ₂, σ₄, σ₆, and σ₈ when the detected pedal force F reaches not smaller than the drive stop reference value F_{H}.

However, as shown in FIG. 8(d), when the time is excessively shortened since the detected pedal force F becomes not larger than the drive stop reference value F_{L} until the driven motor is stopped, chattering cannot be avoided during traveling at low speed. Thus, it is not preferable that the specified short time t₁ be set to an extremely small value. For this reason, the electric assist bicycle of the related art may cause at least one of rapid change in pedal force (chattering) and long-distance travel with the driven motor when pedaling is stopped, thereby making it difficult to concurrently achieve a comfortable ride and safe travel as the rider intends.

In view of the foregoing problems, an object of the present invention is to provide an electric assist bicycle which can concurrently achieve a comfortable ride without causing rapid change in pedal force when pedaling is stopped during traveling at low speed and safe travel as a rider intends by swiftly stopping a motor when pedaling is stopped during traveling at high speed.

### Solution to Problem

In order to attain the object, the invention of claim 1 according to the present invention is an electric assist bicycle which can travel while supplementing the driving force of pedal force of a rider with the driving force of a motor, the electric assist bicycle comprising: a human-powered mechanism driven by the pedal force of the rider; the motor driven by electricity; and an operation control unit for controlling an operation of the motor, the electric assist bicycle being **characterized in that** the operation control unit comprises: a pedal force detector for detecting the intensity of the pedal force; a travel distance detector for detecting the travel distance of the electric assist bicycle; and a motor driving device for driving the motor, and the operation control unit stops the motor driven by the motor driving device from being driven when the travel distance detected by the travel distance detector reaches not smaller than a predetermined upper limit distance in a state in which detected pedal force detected by the pedal force detector is not larger than a predetermined drive stop reference value while the motor is driven by the motor driving device.

The electric assist bicycle can stop the driven motor before the bicycle reaches a distance longer than the upper limit distance after the pedal force becomes not larger than the drive stop reference value during both traveling at low speed and traveling at high speed. Further, since the driven motor is stopped in a certain period of time after the pedal force becomes not larger than the drive stop reference value, the start and stop of driving the motor are prevented from being repeated during normal traveling.

The invention of claim 2 is the electric assist bicycle of claim 1, the electric assist bicycle being **characterized in that** the travel distance detector comprises: a travel speed detector for detecting the travel speed of the electric assist bicycle; a timer for measuring time elapsed since the detected pedal force detected by the pedal force detector becomes not larger than the predetermined drive stop reference value; and an upper limit time calculator for calculating required time until the electric assist bicycle reaches the upper limit distance as variable upper limit time, from the travel speed detected by the travel speed detector and the predetermined upper limit distance, and the operation control unit stops the motor driven by the motor driving device from being driven when the time measured by the timer reaches not smaller than the variable upper limit time before the detected pedal force exceeds the drive stop reference value after the detected pedal force becomes not larger than the drive stop reference value while the motor is driven by the motor driving device.

The electric assist bicycle can stop the driven motor at an appropriate timing in accordance with the travel speed.

The invention of claim 3 is the electric assist bicycle of claim 2, the electric assist bicycle being **characterized in that** the operation control unit stops the motor driven by the motor driving device from being driven at an earlier point of: when the travel distance detected by the travel distance detector reaches not smaller than the predetermined upper limit distance in the state in which the detected pedal force detected by the pedal force detector is not larger than the predetermined drive stop reference value while the motor is driven by the motor driving device; and when the time elapsed since the detected pedal force becomes not larger than the drive stop reference value reaches not smaller than predetermined specified upper limit time before the detected pedal force exceeds the drive stop reference value while the motor is driven by the motor driving device.

The electric assist bicycle can stop the driven motor within the specified upper limit time after the pedal force becomes not larger than the drive stop reference value during traveling at any speed.

### Advantageous Effects of Invention

The electric assist bicycle of the present invention can stop the driven motor before traveling a distance longer than the upper limit distance after the pedal force becomes not larger than the drive stop reference value, so that highly safe travel can be achieved almost as the rider intends even during traveling at high speed.

Further, since the driven motor is stopped in an appropriate period of time after the pedal force becomes not lager than the drive stop reference value, rapid change does not occur in the resistance experienced by the rider during pedaling, so that a comfortable ride can be achieved.

Moreover, since the assisting drive is stopped when the time since the detected pedal force becomes not larger than the drive stop reference value until the detected pedal force exceeds the drive stop reference value reaches not smaller than the variable upper limit time determined in accordance with the travel speed, the driven motor can be stopped at an appropriate timing in accordance with the travel speed, so that a comfortable ride can be achieved.

Furthermore, the assisting drive is stopped, not only when the travel distance reaches not smaller than the upper limit distance in the state in which the detected pedal force is not larger than the drive stop reference value, but also when the time over which the detected pedal force continues to be not larger than the drive stop reference value reaches not smaller than the specified upper limit time. Thus, the driven motor can be stopped within the specified upper limit time after the pedal force becomes not larger than the drive stop reference value no matter how fast the bicycle travels, so that the driven motor can be swiftly stopped even during traveling at low speed, resulting in safe travel.

### Brief Description of Drawings

[FIG. 1] FIG. 1 is a side view showing the overall configuration of an electric assist bicycle according to an example of an embodiment of the present invention.
[FIG. 2] FIG. 2 is a block diagram showing the configuration of the operation control unit of the electric assist bicycle.
[FIG. 3] FIG. 3 shows an example of a flow chart showing an operation of the operation control unit of the electric assist bicycle.
[FIG. 4] FIG. 4 shows the relationship between drive stop distance and travel speed in the electric assist bicycle and the electric assist bicycle of the related art.

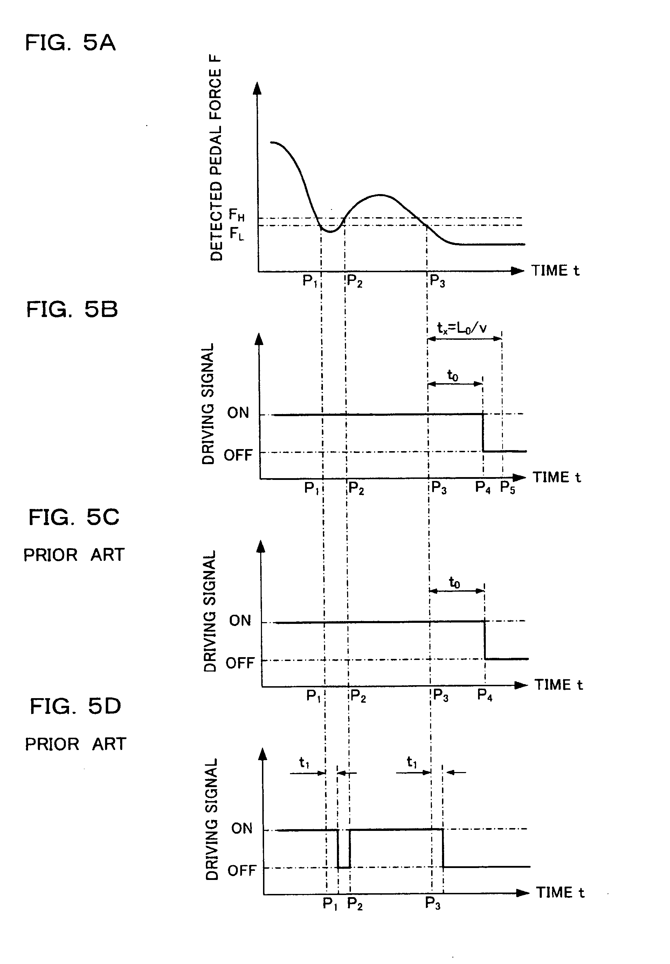

[FIG. 5] FIG. 5 shows change with time in pedal force and motor driving signal during traveling at low speed; FIG. 5(a) shows the change with time in pedal force; FIG. 5(b) shows the change with time in motor driving signal in the electric assist bicycle according to the example of the embodiment of the present invention; FIG. 5(c) shows the change with time in motor driving signal in the related art in which control is performed based on specified upper limit time; and FIG. 5(d) shows the change with time in motor driving signal in the related art in which control is performed based on specified short time.

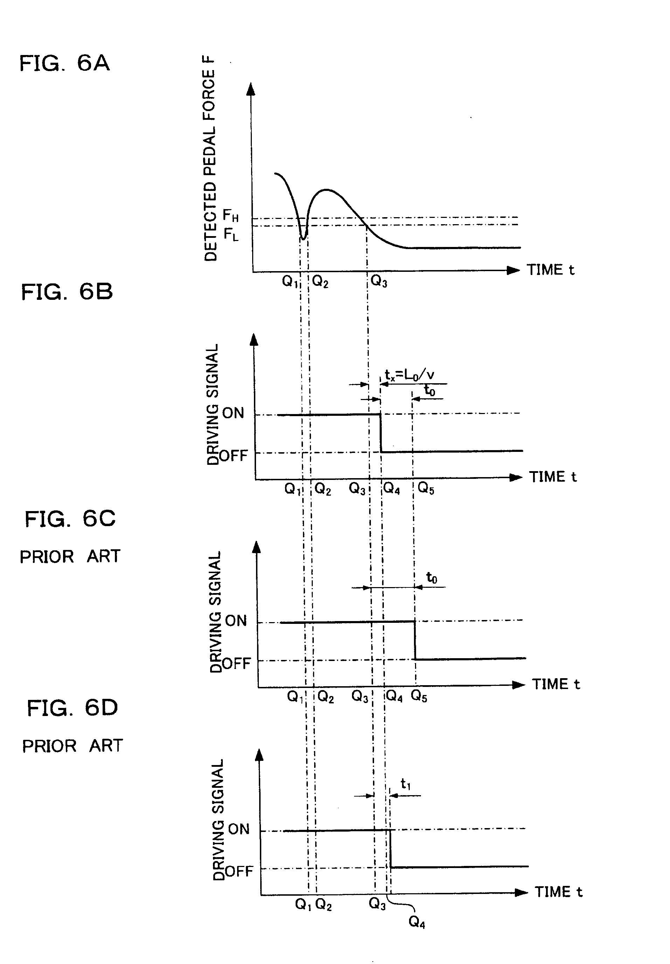

[FIG. 6] FIG. 6 shows change with time in pedal force and motor driving signal during traveling at high speed; FIG. 6(a) shows the change with time in pedal force; FIG. 6(b) shows the change with time in motor driving signal in the electric assist bicycle according to the example of the embodiment of the present invention; FIG. 6(c) shows the change with time in motor driving signal in the related art in which control is performed based on the specified upper limit time; and FIG. 6(d) shows the change with time in motor driving signal in the related art in which control is performed based on the specified short time.
[FIG. 7] FIG. 7 shows the relationship between drive stop distance and travel speed in the electric assist bicycle of the related art.
[FIG. 8] FIG. 8 shows change with time in pedal force and motor driving signal during traveling at low speed in the related art; FIG. 8(a) shows the change with time in pedal force; FIG. 8(b) shows the change with time in motor driving signal in the related art in which control is performed to stop/restart driving at a moment when the pedal force reaches a reference value; FIG. 8(c) shows the change with time in motor driving signal in the related art in which control is performed based on the specified upper limit time; and FIG. 8(d) shows the change with time in motor driving signal in the related art in which control is performed based on the specified short time.
[FIG. 9] FIG. 9 shows change with time in pedal force and motor driving signal during traveling at high speed in the related art; FIG. 9(a) shows the change with time in pedal force; FIG. 9(b) shows the change with time in motor driving signal in the related art in which control is performed to stop/restart driving at the moment when the pedal force reaches the reference value; FIG. 9(c) shows the change with time in motor driving signal in the related art in which control is performed based on the specified upper limit time; and FIG. 9(d) shows the change with time in motor driving signal in the related art in which control is performed based on the specified short time.

### Description of Embodiments

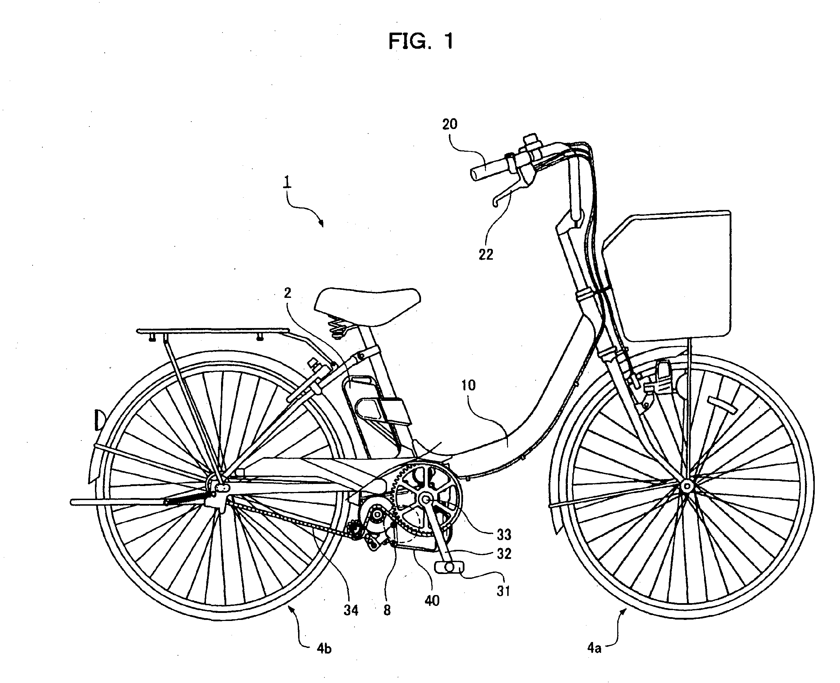

The following will describe an example of an embodiment of the present invention with reference to FIGS. 1 to 6.

### <Overall configuration>

First, the overall configuration of an electric assist bicycle will be described with reference to FIG. 1.

As shown in FIG. 1, an electric assist bicycle 1 of the present invention has a body frame 10 serving as the backbone of the bicycle, a handle 20 with a brake lever 22 attached to the front top part of the body frame 10, and a front wheel 4a pivotally supported by the front bottom part of the body frame 10.

Further, a battery 2 is mounted behind the body frame 10, and a crank arm pedal portion, to which the human driving force of a rider (pedal force) is applied, is provided below the battery. The crank arm pedal portion includes a pedal 31, a crank arm 32, and a crank arm axis 33. The crank arm axis 33 is rotationally supported by a bracket lug (not shown). When pedal force is applied on the pedal 31, the crank arm 32 rotates about the crank arm axis 33, and the rotational driving force is transmitted to a rear wheel 4b via a human-powered mechanism (a chain 34 in FIG. 1 or a belt, a gear and a sprocket wheel). The rear wheel 4b is pivotally supported by the bottom part behind the crank arm pedal portion.

Further, a motor 8 and an operation control unit 40 (a unit including a microcomputer, sensors, and a manipulator) are mounted in the vicinity of the crank arm pedal portion. The motor 8 is electrically driven by the battery 2 as a power source, and the operation control unit 40 controls an operation of the motor 8.

The foregoing is the overall configuration of the electric assist bicycle 1.

### <Configuration of the operation control unit>

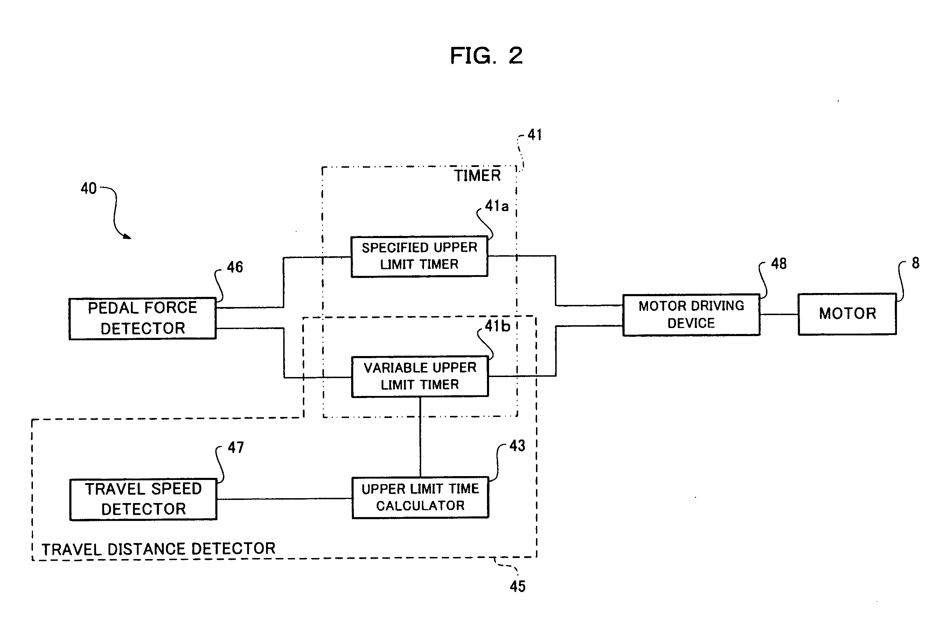

The following will describe the configuration of the operation control unit 40 with reference to FIG. 2.

The operation control unit 40 has a pedal force detector 46 for detecting human driving force (pedal force) applied to the pedal 31 and a travel distance detector 45 for detecting the travel distance of the electric assist bicycle 1.

The travel distance detector 45 includes a travel speed detector 47 for detecting the travel speed of the electric assist bicycle 1 and a variable upper limit timer 41b composing a timer 41. The travel distance of the electric assist bicycle 1 can be determined from the travel speed of the electric assist bicycle 1 and measured time.

The travel distance detector 45 further includes an upper limit time calculator 43 for calculating variable upper limit time tₓ based on travel speed v detected by the travel speed detector 47.

The upper limit time calculator 43 can set the variable upper limit time tₓ (= L₀ / v) as the upper limit of time t_{B} measured by the variable upper limit timer 41b. The variable upper limit time tₓ is time required until the electric assist bicycle 1 reaches predetermined upper limit distance L₀, when the electric assist bicycle 1 continues to travel from a specific point at the travel speed v (that is, a value obtained by dividing the upper limit distance L₀ by the travel speed v detected by the travel speed detector 47).

The travel distance detector 45 determines whether or not the time t_{B} measured by the variable upper limit timer 41b reaches the variable upper limit time tₓ. This makes it possible to detect whether or not the electric assist bicycle 1 reaches the upper limit distance L₀ from the specific point.

By reference to the travel distance detected by the travel distance detector 45, the operation control unit 40 can control an operation of the motor 8 in accordance with the travel distance of the electric assist bicycle 1. Further, time when pedal force detected by the pedal force detector 46 becomes not larger than a drive stop reference value is set as the specific point, so that the operation control unit 40 can stop the driven motor when the bicycle reaches the upper limit distance L₀ after the rider stops pedaling.

The pedal force detector 46 and (the travel speed detector 47 of) the travel distance detector 45 are mounted in the vicinity of the crank arm axis 33 of the crank pedal portion. The pedal force detector 46 may be, for example, a magnetostrictive sensor or an elastic ring-type torque sensor. The travel speed detector 47 can detect a travel speed by performing calculation based on the number of turns of the pedal or wheel detected by a number-of-turns detector such as a rotary encoder. The pedal force detector 46 and the sensor and calculator of the travel speed detector 47 may be separately provided. In particular, the sensor does not always have to be mounted in the vicinity of the crank arm axis 33 but may be mounted in the vicinity of the wheel for effective detection.

The timer 41 includes a specified upper limit timer 41a in addition to the variable upper limit timer 41b. In the specified upper limit timer 41a, specified upper limit time t₀ is set as the upper limit of time to be measured. The specified upper limit timer 41a and the variable upper limit timer 41b can start calculating with pedal force F detected by the pedal force detector 46 as a trigger.

The operation control unit 40 further includes a motor driving device 48 for controlling an operation of the motor 8. Specifically, the motor driving device 48 may include a microcomputer for performing calculation based on amounts detected by the detectors, and a motor driver for controlling a rotation of the motor 8 based on the calculation results. The drive of the motor 8 can be controlled with time t_{A} measured by the specified upper limit timer 41a and time t_{B} measured by the variable upper limit timer 41b as triggers.

Although not shown in FIG. 2, the operation control unit 40 may be configured such that the drive of the motor 8 can be controlled with the amounts detected by the detectors (the pedal force detector 46 and the travel speed detector 47) and an operation of the brake lever 22 as triggers, in addition to the measured times t_{A} and t_{B}. Further, specific examples of a method for controlling the motor 8 include PWM control in which the pulse width of PWM waveform for driving to be outputted to the motor 8 is controlled in accordance with the detected pedal force F, the travel speed v, and a predetermined assist ratio.

Although not shown in FIG. 2, the operation control unit 40 includes an arithmetic processor for performing calculation based on the amounts detected by the detectors, the time measured by the timers, and operations of the manipulator to control operations of the overall electric assist bicycle.

### <Control by the operation control unit>

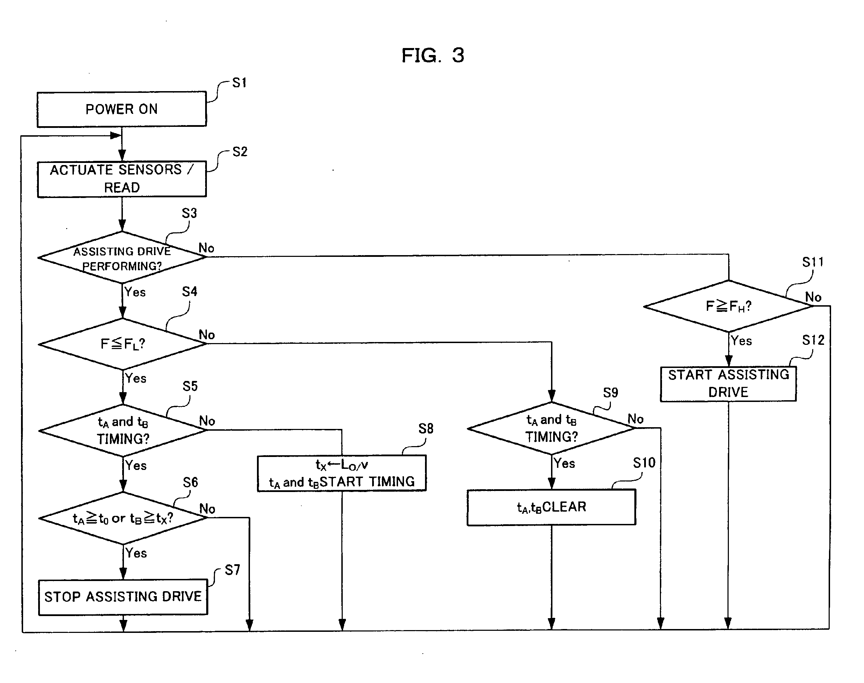

The following will describe an operation of the operation control unit 40 with reference to FIGS. 3 to 6.

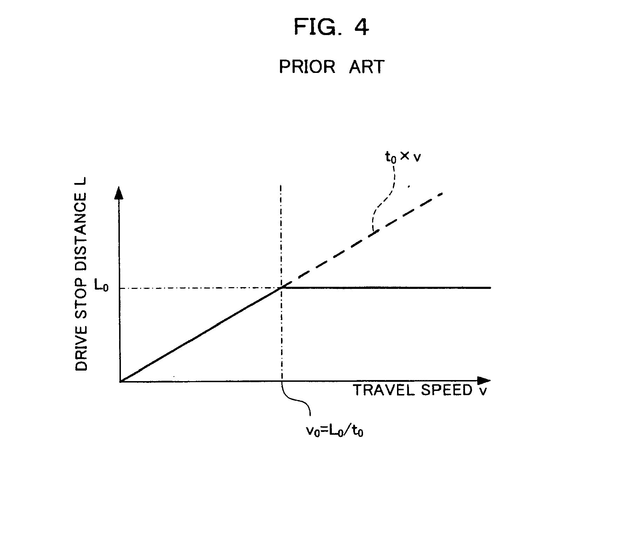

FIG. 3 is an example of a flowchart showing the operation of the operation control unit 40 in the electric assist bicycle 1. FIG. 4 shows the relationship between drive stop distance L and the travel speed v. FIG. 5 shows variations with time of pedal force and a motor driving signal during traveling at low speed. FIG. 6 shows variations with time of pedal force and a motor driving signal during traveling at high speed. The motor driving signal (a signal outputted from the motor driving device 48 to the motor 8) actually has complicated waveform since PWM control is performed in accordance with the traveling condition. For the sake of simplicity, FIGS. 5 and 6 show only whether an instruction to rotate is issued (ON) or an instruction not to rotate is issued (OFF). For comparison with the control method of the related art, FIGS. 5(c) and 6(c) show the state of a motor driving signal in the case where control is performed based on only the specified upper limit time to, and FIGS. 5(d) and 6(d) show the state of a motor driving signal in the case where control is performed based on only specified short time t₁.

As shown in FIGS. 5(a), 5(b), 6(a), and 6(b), in the present embodiment, the driving signal is turned OFF, when a shorter one of the variable upper limit time tₓ (required time until the bicycle reaches the predetermined upper limit distance L₀) and the predetermined specified upper limit time to elapses since the pedal force F detected by the pedal force detector 46 becomes not larger than the predetermined drive stop reference value F_{L} (F ≤ F_{L}) (P₁, P₃ in FIG. 5, and Q₁, Q₃ in FIG. 6) in a state in which the driving signal is ON. That is, the driving signal is turned OFF at an earlier point (P₄ in FIG. 5, and Q₄ in FIG. 6) of when the bicycle reaches at least the upper limit distance L₀ in a state in which the detected pedal force F is not larger than the drive stop reference value F_{L} (P₅ in FIG. 5, and Q₄ in FIG. 6) and when at least the specified upper limit time to elapses (P₄ in FIG. 5, and Q₅ in FIG. 6).

However, as in P₁ and P₂ of FIGS. 5 (a) and 5 (b) and Q₁ and Q₂ of FIG. 6, the driving signal remains ON, in the case where the detected pedal force F exceeds the drive stop reference value F_{L} (P₂, Q₂) before a shorter one of the specified upper limit time to and the variable upper limit time tₓ elapses since the detected pedal force F becomes not larger than the drive stop reference value F_{L} (P₁, Q₁).

The following will describe the specific flow of the operation of the operation control unit 40 in accordance with the flowchart of FIG. 3.

First, a rider rides on the electric assist bicycle 1, turns on the operation control unit 40, and steps on the pedal 31 to rotate the crank arm 32, so that traveling starts (step S1 in FIG. 3).

During traveling, the sensors (the pedal force detector 46 and the travel speed detector 47) are actuated and the detected amounts are read as needed (step S2).

After the detected amounts are read, the arithmetic processor of the operation control unit 40, first, determines whether or not the motor 8 is driven by the motor driving device 48, that is, whether or not assisting drive is operated (step S3).

When it is determined that the assisting drive is not operated, that is, the motor 8 is not driven by the motor driving device 48 in step S3 (step S3 - No), the process proceeds to step S11 in which it is determined whether or not the pedal force F detected by the pedal force detector 46 becomes not smaller than a predetermined drive start reference value F_{H}.

When the detected pedal force F drops below the drive start reference value F_{H} in step S11 (step S11 - No), the assisting drive remains at rest until the detected amounts are read by the sensors again (return to step S2).

When the detected pedal force F becomes not smaller than the drive start reference value F_{H} in step S11 (step S11 - Yes), the process proceeds to step S12 to start driving the motor 8 with the motor driving device 48, that is, start the assisting drive (turn the driving signal ON). Further, the next reading of the amounts detected by the sensors is expected (return to step S2).

In contrast, when it is determined that the assisting drive is operated, that is, the motor 8 is driven by the motor driving device 48 in step S3 (step S3 - Yes), the process proceeds to step S4 to determine whether or not the pedal force F detected by the pedal force detector 46 becomes not larger than the predetermined drive stop reference value F_{L}.

When the detected pedal force F exceeds the drive stop reference value F_{L} in step S4 (step S4 - No), the process proceeds to step S9 to determine whether or not the specified upper limit timer 41a and the variable upper limit timer 41b are actuated (timing is performed).

When the specified upper limit timer 41 and the variable upper limit timer 41b are not actuated in step S9 (step S9 - No), nothing is done, and the next reading of the amounts detected by the sensors is expected (return to step S2). At this point, the assisting drive continues.

In contrast, when the specified upper limit timer 41a and the variable upper limit timer 41b are actuated in step S9 (step S9 - Yes), the process proceeds to step S10 to stop the timing of the specified upper limit timer 41a and the variable upper limit timer 41b and clear the measured time t_{A} and t_{B} (t_{A} = 0, t_{B} = 0). Also at this point, the assisting drive continues.

In other words, in the case where the process proceeds to step S4 - No regardless of the determination result of step S9, that is, the detected pedal force F exceeds the drive stop reference value F_{L}, the assisting drive continues.

In contrast, when the detected pedal force F becomes not larger than the drive stop reference value F_{L} in step S4 (step S4 - Yes), the process proceeds to step S5 to determine whether or not the specified upper limit timer 41a and the variable upper limit timer 41b are actuated (timing is performed).

When the specified upper limit timer 41a and the variable upper limit timer 41b are not actuated in step S5 (step S5 - No), the process proceeds to step S8 to start actuating the specified upper limit timer 41a and the variable upper limit timer 41b (start timing). At this point, the variable upper limit time tₓ of the variable upper limit timer 41b is calculated by the upper limit time calculator 43, and required time until the electric assist bicycle 1 reaches the predetermined upper limit distance L₀ since timing starts (that is, a value obtained by dividing the upper limit distance L₀ by the travel speed v detected by the travel speed detector 47) is set as the variable upper limit time tₓ (tₓ ← L₀ / v). Thereafter, the next reading of the amounts detected by the sensors is expected (return to step S2).

In contrast, when the specified upper limit timer 41a and the variable upper limit timer 41b are actuated in step S5 (step S5 - Yes), the process proceeds to step S6 to determine whether or not the time t_{A} measured by the specified upper limit timer 41a becomes not smaller than the predetermined specified upper limit time t₀, or whether or not the time t_{B} measured by the variable upper limit timer 41b becomes not smaller than the variable upper limit time tₓ calculated by the upper limit time calculator 43 (that is, whether or not the elapsed time reaches the specified upper limit time to in a state in which the detected pedal force F is not larger than the drive stop reference value F_{L}, or whether or not the electric assist bicycle 1 reaches the upper limit distance L₀ since timing starts).

In the case where the elapsed time does not reach either the specified upper limit time to or the variable upper limit time tₓ in the state in which the detected pedal force F is not larger than the drive stop reference value F_{L} (step S6 - No), nothing is done, and the next reading of the amounts detected by the sensors is expected (return to step S2). At this point, the timing of the specified upper limit timer 41a and the variable upper limit timer 41b continues.

In contrast, in the case where the elapsed time reaches a shorter one of the specified upper limit time to and the variable upper limit time tₓ in the state in which the detected pedal force F is not larger than the drive stop reference value F_{L} in step S6 (step S6 - Yes), the process proceeds to step S7 to stop the motor driving device 48 from driving the motor 8, that is, stop the assisting drive (turn the driving signal OFF). And the next reading of the amounts detected by the sensors is expected (return to step S2).

The start and stop of the assisting drive are thus controlled. Hence, as shown in FIGS. 5(a), 5(b), and 5(c), during traveling at low speed (when the travel speed v is small), the timing when the driven motor 8 is stopped is P₄ at which the specified upper limit time to elapses since the detected pedal force F becomes not larger than the drive stop reference value F_{L}, because the specified upper limit time t₀ is shorter than the variable upper limit time tₓ (t₀ < tₓ). Accordingly, the drive stop distance L increases in proportion to the travel speed v (L = to × v), as shown in the left area of FIG. 4.

However, during traveling at high speed (when the travel speed v is large, specifically, not smaller than the value v₀ obtained by dividing the upper limit distance L₀ by the specified upper limit time t₀: v₀ = L₀ / t₀), as shown in FIGS. 6(a), 6(b), and 6(c), the variable upper limit time tₓ is shorter than the specified upper limit time to (in other words, the electric assist bicycle 1 reaches the upper limit distance L₀ before the specified upper limit time to elapses since timing starts). Thus, the timing when the driven motor 8 is stopped is timing Q₄ at which the variable upper limit time tₓ elapses (at which the bicycle reaches the upper limit distance L₀) since the detected pedal force F becomes not larger than the drive stop reference value F_{L}. As shown in the right area of FIG. 4, the drive stop distance L is kept constant after reaching the upper limit distance L₀ regardless of an increase in the travel speed v (L = L₀). Further, as shown in FIGS. 6(b) and 6(d), when the travel speed v is sufficiently large (v > L₀ / t₁), the drive stop timing Q₄, in some cases, comes earlier than the drive stop timing of the related art in which control is performed based on the specified short time t₁.

In the electric assist bicycle of the present invention, even in traveling at high speed, the distance which the electric assist bicycle travels since the rider stops pedaling until the driven motor is stopped (the drive stop distance L) is reduced to about the predetermined upper limit distance L₀. It is thus possible to achieve high safety even during traveling at high speed, without causing such a problem as in the related art in which the motor continues being driven for a while although pedaling is stopped during traveling at high speed to prevent the bicycle from traveling as the rider intends.

Further, during traveling at low speed in which the amplitude of pedal force increases, the motor continues being driven until the required time (specified upper limit time) elapses since the pedal force becomes not larger than the drive stop reference value. It is thus possible to achieve a comfortable ride even in traveling at low speed without causing such a problem as in the control method of the related art of FIG. 5(d). In the control method of the related art, the start and stop of driving the motor are frequently repeated during traveling at low speed in which the amplitude of pedal force increases, resulting in an uncomfortable ride.

As described above, the present invention can achieve high safety during traveling at high speed and a comfortable ride during traveling at low speed.

In the above-described embodiment, the functions of the operation control unit 40 are explained through steps sequentially performed in accordance with the flowchart. However, the steps which have to be continuously performed such as the reading of the amounts detected by the sensors and the driving control of the motor may be concurrently performed. And, the steps may be shifted to another step (the start / stop of driving the motor 8 and the clearing of the measured times) by means of interruption, etc., when the predetermined conditions are satisfied, for example, when the detected pedal force F reaches the threshold value (the drive start reference value F_{H} or the drive stop reference value F_{L}) or when the measured times t_{A}, t_{B} reach the upper limit values.

Further, the travel distance can be determined based on the travel speed and the elapsed time, but a detector for detecting the travel distance directly from the number of turns of the wheel may be provided to stop the assisting drive when the travel distance becomes not smaller than the upper limit distance L₀ in the state in which the detected pedal force F is not larger than the drive stop reference value F_{L} (F ≤ F_{L}).

Moreover, the specified upper limit time may not be set but only the variable upper limit time may be referenced as the upper limit time until the assisting drive is stopped. Specifically, the timing of stopping the assisting drive may be determined by reference to only the travel distance instead of the elapsed time, in the state in which the detected pedal force F is not larger than the drive stop reference value F_{L} (F ≤ F_{L}).

Furthermore, in order to simplify the process, the drive start reference value F_{H} may be set equal to the drive stop reference value F_{L}.

In the above-described embodiment, at a moment when the detected pedal force F becomes not smaller than the drive start reference value F_{H}, the assisting drive starts. However, in order to avoid chattering, the assisting drive may be started when the detected pedal force F continues to be not smaller than the drive start reference value F_{H} over a predetermined period of time.

In addition, the assisting drive may be forcibly stopped when the brake lever 22 is operated such that the assisting drive can be quickly stopped in an emergency.

### Industrial Applicability

The present invention can be widely used for electric assist bicycles each having a human-powered mechanism driven by the pedal force of a rider and an electric motor.

## Claims

1. An electric assist bicycle which can travel while supplementing driving force of pedal force of a rider with driving force of a motor (8), the electric assist bicycle comprising:
a human-powered mechanism driven by the pedal force of the rider;
the motor (8) driven by electricity; and
an operation control unit for controlling an operation of the motor (8),
the electric assist bicycle being **characterized in that** the operation control unit comprises:
a pedal force detector (46) for detecting intensity of the pedal force;
a travel distance detector for detecting a travel distance of the electric assist bicycle; and a motor driving device (48) for driving the motor (8), **characterised by**
the operation control unit stops the motor (8) driven by the motor driving device (48) from being driven when the travel distance detected by the travel distance detector (45) reaches not smaller than a predetermined upper limit distance in a state in which detected pedal force detected by the pedal force detector (46) is not larger than a predetermined drive stop reference value while the motor (8) is driven by the motor driving device (48).

2. The electric assist bicycle according to claim 1, being **characterized in that** the travel distance detector (45) comprises:
a travel speed detector (47) for detecting a travel speed of the electric assist bicycle;
a timer for measuring time elapsed since the detected pedal force detected by the pedal force detector (46) becomes not larger than the predetermined drive stop reference value; and
an upper limit time calculator for calculating required time until the electric assist bicycle reaches the upper limit distance as variable upper limit time, from the travel speed detected by the travel speed detector (47) and the predetermined upper limit distance, and
the operation control unit stops the motor (8) driven by the motor driving device (48) from being driven when the time measured by the timer reaches not smaller than the variable upper limit time before the detected pedal force exceeds the drive stop reference value after the detected pedal force becomes not larger than the drive stop reference value while the motor (8) is driven by the motor driving device (48).

3. The electric assist bicycle according to claim 2, being **characterized in that** the operation control unit stops the motor (8) driven by the motor driving device (48) from being driven at an earlier point of:
when the travel distance detected by the travel distance detector (45) reaches not smaller than the predetermined upper limit distance in the state in which the detected pedal force detected by the pedal force detector (40) is not larger than the predetermined drive stop reference value while the motor (8) is driven by the motor driving device (48); and
when a period of time over which the detected pedal force continues to be not larger than the drive stop reference value reaches not smaller than predetermined specified upper limit time while the motor (8) is driven by the motor driving device (48).

## Patentansprüche

1. Elektrisch unterstütztes Fahrrad, das fahren kann, während eine Antriebskraft einer Pedalkraft eines Fahrers durch eine Antriebskraft eines Motors (8) ergänzt wird, wobei das elektrisch unterstützte Fahrrad umfasst:
einen menschbetätigten Mechanismus, der durch die Pedalkraft des Fahrers angetrieben wird;
den Motor (8), der durch Elektrizität angetrieben wird; und
eine Betriebssteuereinheit zum Steuern eines Betriebes des Motors (8),
wobei das elektrisch unterstützte Fahrrad **dadurch gekennzeichnet ist, dass** die Betriebssteuereinheit umfasst:
einen Pedalkraftdetektor (46) zum Erfassen einer Stärke der Pedalkraft;
einen Fahrentfernungsdetektor (45) zum Erfassen einer Fahrentfernung des elektrisch unterstützten Fahrzeuges; und
eine Motorantriebsvorrichtung (48) zum Antreiben des Motors (8),
**dadurch gekennzeichnet, dass**
die Betriebssteuereinheit den Antrieb des von der Motorantriebsvorrichtung (48) angetriebenen Motors (8) anhält, wenn die von dem Fahrentfernungsdetektor (45) erfasste Fahrentfernung nicht weniger als eine vorbestimmte obere Grenzentfernung in einem Zustand erreicht, in dem eine von dem Pedalkraftdetektor (46) erfasste Pedalkraft nicht größer als ein vorbestimmter Antriebsanhaltebezugswert ist, während der Motor (8) von der Motorantriebsvorrichtung (48) angetrieben wird.

2. Elektrisch unterstütztes Fahrrad nach Anspruch 1,
**dadurch gekennzeichnet, dass** der Fahrentfernungsdetektor (45) umfasst:
einen Fahrgeschwindigkeitsdetektor (47) zum Erfassen einer Fahrgeschwindigkeit des elektrisch unterstützten Fahrrades;
einen Zeitmesser zum Messen einer Zeit, die vergangen ist, seitdem die von dem Pedalkraftdetektor (46) erfasste Pedalkraft nicht größer als der vorbestimmte Antriebsanhaltebezugswert wird; und
einen Obergrenzzeitberechner zum Berechnen einer erforderlichen Zeit, bis das elektrisch unterstützte Fahrrad die obere Grenzentfernung erreicht, als variable obere Grenzzeit aus der von dem Fahrgeschwindigkeitsdetektor (47) erfassten Fahrgeschwindigkeit und der vorbestimmten oberen Grenzentfernung, und
die Betriebssteuereinheit den Antrieb des von der Motorantriebseinheit (48) angetriebenen Motors (8) anhält, wenn die von dem Zeitmesser gemessene Zeit nicht weniger als die variable obere Grenzzeit erreicht, bevor die erfasste Pedalkraft den Antriebsanhaltebezugswert übersteigt, nachdem die erfasste Pedalkraft nicht größer als der Antriebsanhaltebezugswert wird, während der Motor (8) von der Motorantriebsvorrichtung (48) angetrieben wird.

3. Elektrisch unterstütztes Fahrrad nach Anspruch 2, **dadurch gekennzeichnet, dass** die Betriebssteuereinheit den Antrieb des von der Motorantriebsvorrichtung (48) angetriebenen Motors (8) an einem früheren Punkt anhält,
wenn die von dem Fahrentfernungsdetektor (45) erfasste Fahrentfernung nicht weniger als die vorbestimmte obere Grenzentfernung in dem Zustand erreicht, in dem die von dem Pedalkraftdetektor (46) erfasste Pedalkraft nicht größer als der vorbestimmte Antriebsanhaltebezugswert ist, während der Motor (8) von der Motorantriebsvorrichtung (48) angetrieben wird; und
wenn eine Zeitspanne, über die die erfasste Pedalkraft weiterhin nicht größer als der Antriebsanhaltebezugswert ist, nicht weniger als eine vorbestimmte spezifizierte obere Zeitgrenze erreicht, während der Motor (8) von der Motorantriebsvorrichtung (48) angetrieben wird.

## Revendications

1. Bicyclette à assistance électrique qui peut se déplacer tout en complétant la force d'entraînement de la force exercée sur une pédale de cycliste avec la force d'entraînement d'un moteur (8), la bicyclette à assistance électrique comprenant :
un mécanisme à fourniture de puissance humaine entraîné par la force du cycliste sur la pédale,
un moteur (8) entraîné par de l'électricité, et
une unité de commande de fonctionnement permettant de commander le fonctionnement du moteur (8),
la bicyclette à assistance électrique étant **caractérisée en ce que** l'unité de commande de fonctionnement comprend :
un détecteur de force sur une pédale (46) permettant de détecter l'intensité de la force sur la pédale,
un détecteur de distance de trajet (45) permettant de détecter la distance d'un trajet de la bicyclette à assistance électrique, et
un dispositif (48) d'entraînement de moteur permettant d'entraîner le moteur (8), **caractérisée par**
l'unité de commande de fonctionnement stoppe l'entraînement du moteur (8) entraîné par le dispositif (48) d'entraînement de moteur lorsque la distance de trajet détectée par le détecteur de distance de trajet (45) atteint au moins une distance limite supérieure prédéterminée dans un état, dans lequel la force sur la pédale détectée que détecte le capteur de force sur une pédale (46) n'est pas supérieure à une valeur de référence d'arrêt d'entraînement prédéterminée alors que le moteur (8) est entraîné par le dispositif (48) d'entraînement de moteur.

2. Bicyclette à assistance électrique selon la revendication 1, **caractérisée en ce que** le détecteur de distance de trajet (45) comprend :
un détecteur de vitesse de trajet (47) permettant de détecter la vitesse de trajet de la bicyclette à assistance électrique,
un compteur permettant de mesurer le temps écoulé depuis que la force détectée sur la pédale qui a été détectée par le détecteur d'une force sur une pédale (46) ne dépasse pas la valeur de référence d'arrêt d'entraînement prédéterminée, et
un calculateur de temps limite supérieur permettant de calculer le temps requis jusqu'à ce que la bicyclette à assistance électrique atteigne la distance limite supérieure comme temps limite variable supérieur à partir de la vitesse de trajet détectée par le détecteur de vitesse de trajet (47) et distance limite supérieure prédéterminée, et
l'unité de commande de fonctionnement stoppe l'entraînement du moteur (8) entraîné par le dispositif (48) d'entraînement de moteur lorsque le temps mesuré par le compteur ne devient pas inférieur au temps limite supérieur variable avant que la force détectée sur la pédale dépasse la valeur de référence d'arrêt d'entraînement après que la force détectée sur la pédale ne dépasse plus la valeur de référence d'arrêt d'entraînement alors que le moteur (8) est entraîné par le dispositif (48) d'entraînement du moteur.

3. Bicyclette à assistance électrique selon la revendication 2, **caractérisée en ce que** l'unité de commande de fonctionnement arrête l'entraînement du moteur (8) par le dispositif (48) d'entraînement de moteur à un point précédent :
lorsque la distance de trajet détectée par le détecteur de distance de trajet (45) n'est pas inférieure à la distance limite supérieure prédéterminée dans l'état, dans lequel la force détectée sur la pédale qui a été détectée par le détecteur de force sur une pédale (40) n'est pas supérieure à la valeur de référence d'arrêt d'entraînement prédéterminé alors que le moteur (8) est entraîné par le dispositif (48) d'entraînement de moteur, et
lorsqu'un intervalle de temps, au-dessus duquel la force détectée sur la pédale n'est toujours pas supérieure à la valeur de référence limite d'arrêt d'entraînement, ne devient pas plus petit que le temps limite supérieur spécifié prédéterminé alors que le moteur (8) est entraîné par le dispositif (48) d'entraînement de moteur.
